**Europäisches Patentamt**

**European Patent Office**

**Office européen des brevets**

(11) Veröffentlichungsnummer: **0 065 994**
**A1**

(12) **EUROPÄISCHE PATENTANMELDUNG**

(21) Anmeldenummer: **81103989.0**

(22) Anmeldetag: **23.05.81**

(51) Int. Cl.³: **G 01 D 13/12**

(43) Veröffentlichungstag der Anmeldung:
**08.12.82 Patentblatt 82/49**

(84) Benannte Vertragsstaaten:
**AT CH DE FR GB IT LI NL SE**

(71) Anmelder: **Press- und Spritzwerk Udo Ditter GmbH & Co.**
**Hausacher Strasse 21**
**D-7612 Haslach i.K.(DE)**

(72) Erfinder: **Pietzko, Dieter**
**Hausmatt 12**
**D-7611 Steinach(DE)**

(72) Erfinder: **Heups, Gert**
**Briehelweg 20**
**D-7635 Schwanau 2(DE)**

(72) Erfinder: **Eichner, Waldemar**
**Schlossweg 26**
**D-7633 Seelbach(DE)**

(74) Vertreter: **Thoma, Friedrich Xaver**
**Leimengrubweg 12**
**D-7612 Haslach i.k.(DE)**

(54) **Verfahren zur Herstellung von Skalen, Linealen und/oder vergleichbarer Einrichtungen aus Kunststoffen, insbesondere für Messvorrichtungen.**

(57) Nach dem vorliegenden Verfahren werden die Markierungen (2), die Schriftzeichen (3) und/oder die sonstigen Darstellungen (5) durch Aufdrucken, Aufprägen, Aufspritzen oder phototechnisch rationell und wirtschaftlich, mit hoher Genauigkeit und Reproduzierbarkeit zunächst auf einen Schichtkörper (4) aufgetragen, der dann auf dem eigentlichen substanziellen Teil (6) der Einrichtung angeordnet, dort vom Werkstoff dieses Teiles (6) teilweise oder erforderlichenfalls allseitig, insbesondere stoffschlüssig ummantelt wird. Dabei kann der Schichtkörper (4) auf den substanziellen Teil (6) aufgeschweißt oder beim Herstellen des substanziellen Teiles (6) spritzgießtechnisch stoffschlüssig ummantelt werden.

./...

Fig.1

Fig.2

Verfahren zur Herstellung von Skalen, Linealen und/oder vergleichbarer Einrichtungen aus Kunststoffen, insbesondere für Meßvorrichtungen.

Die Erfindung bezieht sich auf ein Verfahren zur Herstellung von Skalen, Linealen und/oder vergleichbarer Einrichtungen aus Kunststoffen, bei welchen die dort vorgesehenen Markierungen, Schriftzeichen und/oder sonstigen Darstellungen mit größter, insbesondere zueinander mäßlicher Genauigkeit und mit zuverlässiger, verschleißfester Dauerhaftigkeit auf dem substanziellen Teil derartiger Einrichtungen aufgetragen und angeordnet sind, insbesondere für Meßvorrichtungen.

Bei derartigen Einrichtungen, wie Skalen, Lineale, um nur diese beiden Anwendungsbeispiele, insbesondere für Meßvorrichtungen, zu nennen, sind Markierungen in Form von Maßstäben mit genauesten Teilungen erforderlich, die nicht nur mit hinreichend größter, reproduzierbarer Genauigkeit rationell und wirtschaftlich auf den substanziellen, aus einem Kunststoff besteheneden, Teil einer derartigen Einrichtung aufgetragen oder aufgebracht werden können, sondern dort auch zuverlässig Dauerhaft und insbesondere verschleißfest angeordnet werden können.

Bei bekanntgewordenen derartigen Einrichtungen für Meßvorrichtungen werden die erforderlichen Markierungen, Schriftzeichen und/oder sonstigen Darstellungen zum Teil aufgedruckt, oder aufgeprägt, oder einstückig, zusammen mit der Herstellung des substanziellen Teiles solcher Einrichtungen aus einem Kunststoff aufgespritzt. Solche Herstellungsverfahren sind nicht nur ungenau und teuer, sondern auch in hohem Maße verschleißanfällig.

Bei anderen bekanntgewordenen Einrichtungen, an welche hinsichtlich der Genauigkeit oder der Präzision der vorgesehenen Markierungen, Schriftzeichen und/oder sonstigen Darstellungen, höchste Anforderungen gestellt werden, werden diese dort teilweise von Hand oder maschinell, in einem spanabhebenden Arbeitsgang auf den substanziellen Teil solcher Einrichtungen aufgetragen und danach mit Farbe ausgelegt. Solche Herstellungsverfahren sind nicht nur äußerst aufwendig und teuer, sondern auch in hohem Maße verschleißanfällig.

Der Erfindung liegt die Aufgabe zugrunde, ein Verfahren zur Herstellung von Skalen, Linealen und/oder vergleichbarer Einrichtungen aus Kunststoffen, insbesondere für Meßvorrichtungen, zu schaffen, bei welchem die vorgesehenen Markierungen, die Schriftzeichen und/oder die sonstigen Darstellungen äußerst rationell, wirtschaftlich und mit größter Genauigkeit auf den substanziellen Teil einer solchen Einrichtung aufgetragen und dort hinreichend dauerhaft und verschleißfest angeordnet werden kann.

Diese Aufgabe wird erfindungsgemäß dadurch gelöst, daß die Markierungen, die Schriftzeichen und/oder die sonstigen, vorgesehenen Darstellungen zunächst auf einen Schichtkörper aufgetragen und dort nichtlösbar angeordnet sind, und daß der so gestaltete Schichtkörper auf den substanziellen Teil der Einrichtung, den Erfordernissen entsprechend räumlich angeordnet, vom Werkstoff dieses Teiles teilweise, oder erforderlichenfalls allseitig, insbesondere stoffschlüssig ummantelt ist.

Der Schichtkörper kann dort aus einer, insbesondere transparenten Kunststofffolie bestehen, auf welcher die Markierungen, die Schriftzeichen und/oder die sonstigen dort vorgesehenen Darstellungen aufgedruckt, aufgeprägt, aufgespritzt, eingestanzt oder filmtechnisch aufgetragen sind.

Vorteilhaft bei diesem Verfahren zur Herstellung von Skalen, Linealen und/oder vergleichbarer Einrichtungen aus Kunststoffen, insbesondere für Meßvorrichtungen, ist nicht nur, daß dort die Markierungen, Schriftzeichen und/oder sonstigen vorgesehenen Darstellungen mit größtmöglicher Genauigkeit, rationell und wirtschaftlich auf einen solchen Schichtkörper aufgetragen werden können, sondern daß ein solcher gestalteter Schichtkörper ebenso rationell und wirtschaftlich und mit größter Genauigkeit, insbesondere hinsichtlich erforderlicher Fixpunkte, vom eigentlichen Teil einer solcher Einrichtung teilweise, oder erforderlichenfalls allseitig, insbesondere stoffschlüssig ummantelt werden kann, zur dauerhaften und verschleißfesten Anordnung der Markierungen, Schriftzeichen und/oder sonstigen Darstellungen auf einer solchen Einrichtung. Vorteilhaft ist ferner die, nach diesem Verfahren erzielbare, relativ einfache Herstellung der Fertigungswerkzeuge und sonstigen Fertigungseinrichtungen, sowohl für den Schichtkörper und dessen Gestaltung, als auch für den substanziellen Teil derartiger Einrichtungen.

Weitere Einzelheiten des vorliegenden Verfahrens, sowie Ausführungsbeispiele, die nach dem erfindungsgemäßen Verfahren hergestellt sind, sind in den Zeichnungen dargestellt und werden im folgenden näher erläutert. Es zeigen

Fig. 1 eine Vorderansicht eines Lineals für ein Zeichengerät, mit maßstüblicher Einrichtung für die Verwendung auf Zeichenmaschinen,

Fig. 2 eine Querschnittsansicht des Lineals nach Fig. 1,

Fig. 3 eine Querschnittsansicht einer anderen Herstellungsart eines Lineals nach Fig. 1,

Fig. 4 eine Querschnittsansicht wieder einer anderen Herstellungsart eines Lineals nach Fig. 1,

Fig. 5 eine Vorderansicht einer Visierscheibe für den Einsatz an Meßwerkzeugen, Maschinen, optischen Geräten, Waffen,

Fig. 6 eine Querschnittsansicht einer Scheibe nach Fig. 4.

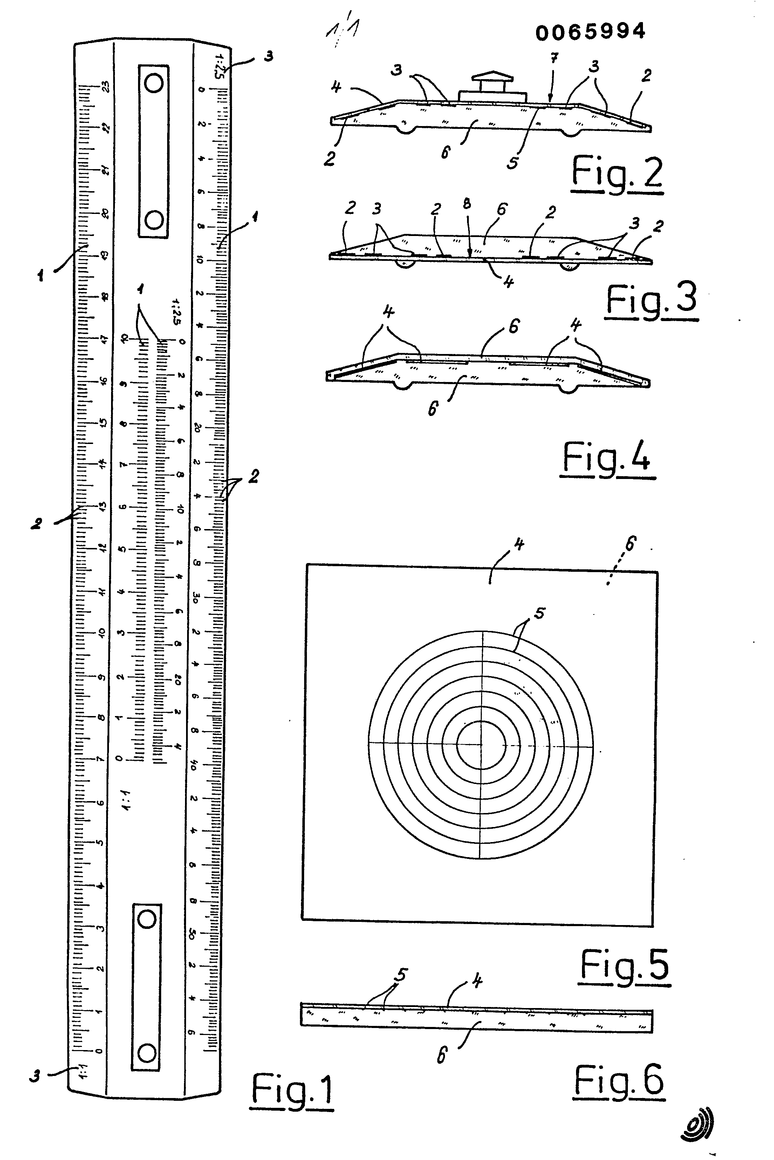

Das, in der Fig. 1 dargestellte, Lineal für ein Zeichengerät ist dort mit metrischen Maßeinteilungen 1, teils in natürlicher Größe M 1:1, teils für Verkleinerungen M 1:1,5 ausgestattet. Derartige Lineale sind häufig aus einem transparenten, insbeson-

dere glasklaren Kunststoff hergestellt, auf dem die Maßeinteilungen 1 in Form von Markierungen 2 und von Schriftzeichen 3, üblicherweise in schwarzer Farbe, aufgetragen sind. Es ist offensichtlich, daß dort die Genauigkeit der gesamten Maßeinteilungen 1 hinreichend gewährleistet sein muß. Außerdem müssen dort die Maßeinteilungen 1 gegen Verschleiß und Abnutzung hinreichend geschützt sein.

Die schaubildliche Ansicht in der Fig. 2 zeigt im Schnitt einen zweckmäßigen Aufbau eines Lineals nach Fig. 1, gemäß dem Verfahren nach der vorliegenden Erfindung, in einer bestimmten Herstellungsart. Wie dort die Fig. 2 im einzelnen zeigt, ist zunächst ein sogenannter Schichtkörper 4, insbesondere in der Form einer dünnen Folie, vorgesehen, der aus einem beliebigen Werkstoff bestehen kann, und der im vorliegenden Falle aus einem glasklaren Kunststoff hergestellt ist. Auf dem Schichtkörper 4 sind die erforderlichen Markierungen 2, Schriftzeichen 3 und/oder sonstigen Darstellungen 5, insbesondere dort von der Rückseite der Einsichtseite her aufgedruckt, aufgeprägt, aufgelegt, aufgespritzt oder phototechnisch aufgetragen. Dieses jeweilige Auftragen der Markierungen 2, der Schriftzeichen 3 und/oder oder der sonstigen Darstellungen 5 kann dort mit größter Genauigkeit, fertigungstechnisch rationell und wirtschaftlich erfolgen. Auch die Reproduzierbarkeit dieser Auftragungen, die dort in jeder beliebigen Erfordernis und Ausführung, sowie in jeder Farbe, ein- und mehrfarbig, erfolgen kann, ist rationell und wirtschaftlich sichergestellt.

Dieserart gestaltete, fertige Schichtkörper 4 können nach einem der vielen möglichen Herstellungsverfahren für derartige Lineale oder vergleichbare Einrichtungen, insbesondere für Meßvorrichtungen, gemäß dieser Erfindung, vom substanziellen Teil 6 einer solchen Einrichtung teilweise oder erforderlichenfalls allseitig ummantelt werden.

Die Fig. 2 zeigt dort ein bestimmtes, der möglichen, Herstellungsverfahren. Dort wird der Schichtkörper 4, insbesondere in ein Spritzgußwerkzeug eingelegt, das dann mit einem Kunststoff gefüllt wird, der dort den Schichtkörper 4 teilweise, insbesondere von der Rückseite her, ummantelt. 6 bezeichnet dort den substanziellen Teil des Lineals. Die Vorderseite kann dort unmittelbar vom Schichtkörper 4 gebildet werden. Es ist jedoch auch vorgesehen, daß vorderseitig eine relativ dünne Schicht 7, insbesondere aus dem Werkstoff des Teiles 6 bestehend, erforderlichenfalls vorgesehen ist. Durch diese Schicht 7 sind die Markierungen 2, die Schriftzeichen 3 und/oder die sonstigen Darstellungen hinreichend gegen Abnützung oder Verschleiß geschützt. Im vorliegenden Falle, wo der Schichtkörper 4 die, insbesondere vorderseitige, Schicht 7 bildet, besteht der Werkstoff des Schichtkörpers 4 vorteilhafterweise aus einer Zusammensetzung, die mit dem Werkstoff des substanziellen Teiles 6 vergleichbar ist, sodaß es dort möglich wird, daß der Schichtkörper 4 mit dem Werkstoff des substanziellen Teiles 6, beim Arbeitsgang des Spritzgießens, einen Stoffschluß, zumindest jedoch einen völligen Formschluß, eingeht, ohne daß jedoch der Werkstoff des Schichtkörpers 4, beim Arbeitsgang des Spritzgießens des Teiles 6, in einen, wenn auch kurzfristigen, plastischen Zustand übergeht. Daß diese Zustandsänderung nicht eintreten kann, dafür können werkzeugtechnische Maßnahmen, insbesondere kühltechnischer Art, vorgesehen werden. Im vorliegenden Falle sind demnach die Markierungen 2, die Schriftzeichen 3 und/oder die sonstigen Darstellungen 5 in einem sogenannten Hinterdruckverfahren, durch Aufdrucken, Aufprägen, Aufspritzen oder phototechnisches Auftragen auf dem Schichtkörper 4 angeordnet worden, der dort aus einem glasklaren Kunststoff bestehen kann.

Insbesondere ist es in jedem Falle zweckmäßig, wenn, wie bereits oben erwähnt, den beiden Werkstoffen, dem des Schichtkörpers 4 und dem des substanziellen Teiles 6, die gleichen chemischen und physikalischen Eigenschaften zugrunde liegen, um nicht nur eine gewünschte stoffschlüssige Verbindung zwischen dem Schichtkörper 4 und dem substanziellen Teil 6 zu erzielen, sondern auch um insbesondere etwaige mechanische Spannungen, die dort beispielsweise durch Temperatur- oder durch Feuchtigkeitseinflüsse ergeben können, und die wiederum unterschiedliche Ausdehnungskoeffizienten der Werkstoffe beeinflussen können, zu unterbinden.

Es liegt im Rahmen der vorliegenden Erfindung, daß es natürlich auch möglich ist, den dort gestalteten fertigen Schichtkörper 4, auch in einem anderen Verfahren, als dem des Spritzgießens, auf den substanziellen Teil 6 zu übertragen und dort gemäß der Erfindung anzuordnen. So ist es insbesondere möglich, den fertigen Schichtkörper 4 mit den dort im sogenannten Hinterdruckverfahren aufgetragenen Markierungen 2, Schriftzeichen 3 und/oder sonstigen Darstellungen 5 auf einen spritzgußtechnisch vorgefertigten substanziellen Teil 6 aufzuschweißen, und zwar in einem Ultraschallschweißverfahren.

Eine weitere zweckmäßige Möglichkeit zur Herstellung eines Lineals oder vergleichbarer Einrichtungen, gemäß der vorliegenden Erfindung, zeigt die Fig. 3. Dort ist der Schichtkörper 4 derart gestaltet, daß die Markierungen 2, die Schriftzeichen 3 und/oder sonstigen Darstellungen auf der Vorder- oder Sichtseite 8 angeordnet sind, und daß ein derart gestalteter Schichtkörper 4 in ein Spritzgußwerkzeug eingelegt werden kann und von der Vorder- oder Sichtseite 8 her mit einem glasklaren Kunststoff stoffschlüssig, teilweise ummantelt zum eigentlichen substanziellen Teil 6 eines entsprechenden Lineals geformt wird. Die Markierungen 2, Schriftzeichen 3 und/oder Darstellungen 5 können auch dort wieder, wie bereits zuvor geschildert, durch Aufdrucken, Aufspritzen, Aufprägen oder phototechnisch auf den Schichtkörper 4 aufgetragen sein. Auch bei dieser Herstellungsart liegt es im Rahmen der Erfindung, daß ein Schichtkörper 4 mit vorderseitig aufgetragenen Markierungen 2, Schriftzeichen 3 und/oder sonstigen Darstellungen 5 schweißtechnisch, wie oben näher beschrieben, auf einen spritzgußtechnisch vorgefertigten substanziellen Teil 6 formschlüssig, insbesondere jedoch stoffschlüssig, nichtlösbar befestigt werden kann.

Eine weitere zweckmäßige Herstellungsart eines Lineals oder einer vergleichbaren Einrichtung, insbesondere für Meßvorrichtungen, nach dem erfindungsgemäßen Verfahren, zeigt die Fig. 4. Dort wird der fertig gestaltete Schichtkörper 4 zwischen zwei Einzelteilen des substanziellen Teiles 6, die vorgefertigt wurden, angeordnet. Die dortigen beiden Einzelteile des substanziellen Teiles 6, werden nach dem Einlegen des Schichtkörpers 4 insbesondere miteinander verschweißt. Es kann erforderlichenfalls dort auch vorgesehen sein, den Schichtkörper 4 mindestens mit einem der beiden Einzelteile des substanziellen Teiles 6 zu verschweißen oder dort zumindest in der Lage zu sichern. Der Schichtkörper 4 wäre auch bei dieser Herstellungsart so auf dem substanziellen Teil 6 angeordnet, daß dort die Markierungen 2, Schriftzeichen 3 und/oder sonstigen Darstellungen 5 insbesondere verschleißfest angeordnet sind.

Nach einem der vorgenannten Verfahrens- oder Herstellungsschritte können auch beliebig gestaltete Skalen für Instrumente und sonstige Meßvorrichtungen, sowie Visierscheiben für Meßwerkzeuge, für Werkzeugmaschinen oder für Waffen hergestellt werden. Die Fig. 5 zeigt eine derartige Visierscheibe mit den dort üblichen räumlichen Darstellungen 5 auf einem in der Fig. 6 näher zezeigten Schichtkörper 4, der vom substanziellen Teil 6 der dortigen Einrichtung teilweise oder allseitig ummantelt ist. Eine teilweise oder allseitige Ummantelung kann dort wiederum im Rahmen der bereits oben näher geschilderten Herstellung des substanziellen Teiles 6 erfolgen, indem der Schichtkörper 4 in das entsprechende Spritzgußwerkzeug, das den substanziellen Teil formt, eingelegt wird und dann teilweise oder allseitig ummantelt wird, oder daß der Schichtkörper 4 unmittelbar auf den Teil 6 aufgeschweißt, oder zwischen zwei Einzelteilen, die den substanziellen Teil 6 zusammen bilden, eingeschweißt wird.

Es ist offensichtlich, daß die Herstellung von solchen Linealen, Skalen oder Visierscheiben, um nur diese näher zu nennen,
gemäß dem Verfahren nach der Erfindung, äußerst rationell,
leicht reproduzierbar und wirtschaftlich ist, wobei die Genauigkeit, insbesondere der Maßeinteilungen 1, sowie die Verschleißfestigkeit bei derartigen Einrichtungen außerordentlich groß ist.

Das vorliegende Verfahren beschränkt sich in seiner Anwendung
nicht nur auf die oben wiederholt genannten Anwendungs- und
Ausführungsbeispiele, sondern ist auch vorteilhaft zur Herstellung sogenannter Meßscheiben, Noniusringen, Skalenringen für Zeichenköpfe von Zeichenmaschinen, für Schriftschablonen, Kurvenlinealen, Radiuslehren geeignet. Außerdem können nach diesem Verfahren
Zahlenrollen, Drehknöpfe oder ganz allgemein Zifferblätter für
Apparate, Armaturen und Uhren rationell und wirtschaftlich äußerst
vorteilhaft hergestellt werden.

Patentansprüche

1. Verfahren zur Herstellung von Skalen, Linealen und/oder vergleichbarer Einrichtungen aus Kunststoffen, bei welchen die dort vorgesehenen Markierungen (2), Schriftzeichen (3) und/oder sonstigen Darstellungen (5) mit größter, insbesondere zueinander maßlicher Genauigkeit und zuverlässiger, verschleißfester Dauerhaftigkeit auf dem substanziellen Teil (6) derartiger Einrichtungen aufgetragen und angeordnet sind, insbesondere für Meßvorrichtungen, dadurch gekennzeichnet, daß die Markierungen (2), die Schriftzeichen (3) und/oder die sonstigen Darstellungen (5) zunächst auf einen Schichtkörper (4) aufgetragen und dort nichtlösbar angeordnet sind, und daß der so gestaltete Schichtkörper (4) auf den substanziellen Teil (6) der Einrichtung, den Erfordernissen entsprechend räumlich angeordnet, vom Werkstoff des substanziellen Teiles (6) teilweise, oder erforderlichenfalls allseitig, insbesondere stoffschlüssig ummantelt ist.

2. Verfahren nach Patentanspruch 1, dadurch gekennzeichnet, daß der Schichtkörper (4) aus einer transparenten, insbesondere glasklaren Folie aus einem Kunststoff hergestellt ist.

3. Verfahren nach Patentanspruch 1 und 2, dadurch gekennzeichnet, daß die Markierungen (2), die Schriftzeichen (3) und/oder die sonstigen vorgesehenen oder erforderlichen Darstellungen (5) auf den Schichtkörper (4) durch Aufdrucken, Aufprägen, Aufspritzen, oder phototechnisch aufgetragen sind.

4. Verfahren nach Patentanspruch 1 bis 3, dadurch gekennzeichnet, daß die Markierungen (2), die Schriftzeichen (3) und/oder die sonstigen Darstellungen (5) in einem sogenannten Hinterdruck auf den Schichtkörper (4) angetragen sind.

5. Verfahren nach Patentanspruch 1 bis 3, dadurch gekennzeichnet, daß die Markierungen (2), die Schriftzeichen (3) und/oder die sonstigen Darstellungen (5) auf der Vorder- oder der Sichtseite (8) auf dem Schichtkörper (4) aufgetragen und angeordnet sind.

6. Verfahren nach Patentanspruch 1 bis 5, dadurch gekennzeichnet, daß der Schichtkörper (4) in einem Spritzgußverfahren vom Werkstoff des substanziellen Teiles (6) teilweise, insbesondere bis auf die jeweilige, durch den Schichtkörper (4) gebildete Vorder- oder Rückseite der Einrichtung, stoffschlüssig ummantelt ist.

7. Verfahren nach Patentanspruch 1 bis 5, dadurch gekennzeichnet, daß der Schichtkörper (4) in einem, insbesondere Ultraschall-Schweißverfahren auf den substanziellen Teil (6) einer Einrichtung einseitig formschlüssig, insbesondere stoffschlüssig aufgetragen und nichtlösbar befestigt ist.

8. Verfahren nach Patentanspruch 1 bis 5, dadurch gekennzeichnet, daß der Schichtkörper (4) im substanziellen Teil (6) eingelagert ist, und daß die Öffnung zum Einlagern des Schichtkörpers (4) am Teil (6) insbesondere schweißtechnisch schließbar ist.

9. Verfahren nach Patentanspruch 7, dadurch gekennzeichnet, daß der substanzielle Teil (6) aus mindestens zwei Einzelteilen hergestellt ist, daß zwischen diese Einzelteile mindestens ein Schichtkörper (4) eingelagert ist, und daß die Einzelteile des Teiles (6) einzeln, oder zusammen mit dem Schichtkörper (4) miteinander, insbesondere ultraschall, verschweißt sind.

10. Verfahren nach Patentanspruch 1, dadurch gekennzeichnet, daß die Markierungen (2), die Schriftzeichen (3) und/oder die sonstigen, vorgesehenen oder erforderlichen Darstestellungen (5) in den Schichtkörper (4) eingestanzt sind, und daß der Werkstoff des substanziellen Teiles (6), der eine andere Farbe als die des Werkstoffes des Schichtkörpers (4) haben kann, die Ausstanzungen füllt und erforderlichenfalls vorderseitig überzieht.

0065994

Fig.1

Fig.2

Fig.3

Fig.4

Fig.5

Fig.6

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | AU - A - 55795/73 (GRIFFIN)<br>   * Insgesamt *<br><br>-- | 1-3,5-7 | G 01 D 13/12 |
| X | US - A - 4 092 191 (JONES)<br>   * Zusammenfassung; Figuren; Ansprüche *<br><br>-- | 1-3,5-7 | |
| | FR - A - 2 442 144 (GRAPHOPLEX)<br>   * Figuren; Ansprüche *<br><br>-- | 1-10 | **RECHERCHIERTE SACHGEBIETE (Int. Cl.³)** |
| | FR - A - 2 370 952 (LEQUIEN)<br>   * Figuren; Ansprüche *<br><br>---- | 1-3 | G 01 D 13/02<br>         13/04<br>         13/12<br>         13/14<br>         13/16<br>G 01 B  3/02<br>         3/04<br>         3/08<br>         3/10<br>B 43 L  7/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-01-1982 | LLOYD |

EPA form 1503.1   06.78